(19) Europäisches Patentamt
European Patent Office
Office européen des brevets

(11) EP 0 677 080 B1

(12) **EUROPÄISCHE PATENTSCHRIFT**

(45) Veröffentlichungstag und Bekanntmachung des Hinweises auf die Patenterteilung:
**12.03.1997 Patentblatt 1997/11**

(21) Anmeldenummer: **94903854.1**

(22) Anmeldetag: **21.12.1993**

(51) Int Cl.[6]: **C08G 69/08**, C08G 69/10, C08G 73/10, C08G 73/06

(86) Internationale Anmeldenummer:
**PCT/EP93/03641**

(87) Internationale Veröffentlichungsnummer:
**WO 94/15993 (21.07.1994 Gazette 1994/17)**

(54) **VERFAHREN ZUR HERSTELLUNG VON POLYMERISATEN DER ASPARAGINSÄURE**

METHOD OF PRODUCING POLYMERS OF ASPARTIC ACID

PROCEDE DE PREPARATION DE POLYMERES DE L'ACIDE ASPARTIQUE

(84) Benannte Vertragsstaaten:
**AT BE CH DE DK ES FR GB IT LI NL PT SE**

(30) Priorität: **02.01.1993 DE 4300020**

(43) Veröffentlichungstag der Anmeldung:
**18.10.1995 Patentblatt 1995/42**

(73) Patentinhaber: **BASF AKTIENGESELLSCHAFT**
**67056 Ludwigshafen (DE)**

(72) Erfinder:
- **KRONER, Matthias**
**D-67304 Eisenberg (DE)**
- **HARTMANN, Heinrich**
**D-67117 Limburgerhof (DE)**
- **SCHORNICK, Gunnar**
**D-67271 Neuleiningen (DE)**
- **BAUR, Richard**
**D-67112 Mutterstadt (DE)**
- **POTTHOFF-KARL, Birgit**
**D-67061 Ludwigshafen (DE)**
- **SCHWENDEMANN, Volker**
**D-67434 Neustadt (DE)**
- **KUD, Alexander**
**D-55234 Eppelsheim (DE)**

(56) Entgegenhaltungen:
**EP-A- 0 256 366**
**WO-A-93/23452**
**DD-A- 262 665**
**US-A- 4 590 260**
**US-A- 5 057 597**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 677 080 B1

## Beschreibung

Die Erfindung betrifft ein Verfahren zur Herstellung von Polymerisaten der Asparaginsäure durch thermische Kondensation von Halbamiden der Maleinsäure, Fumarsäure oder der Ammoniumsalze der Halbamide dieser Säuren, ggf. in Gegenwart von cokondensierbaren Verbindungen. Die erfindungsgemäß hergestell ten Polymerisate sind als Scale-Inhibitor, als Dispergiermittel für Pigmente und als Additiv zu Wasch- und Reinigungsmitteln zu verwenden.

Polyasparaginsäure und Kondensate der Asparaginsäure mit anderen Aminosäuren sind bekannt.

So wird beispielsweise in Nature, Band 163, 213 (1949) beschrieben, daß sich beim Erhitzen von Asparaginsäure auf 200°C hochmolekulare Kondensationsprodukte bilden. Aus J. Amer. Chem. Soc., Band 74, Seiten 5304 und 5307 (1952) ist die thermische Polykondensation von Asparaginsäure/Glutaminsäuremischungen in Gegenwart von Phosphorsäure bekannt.

In Arch.Biochem.Biophys. Band 86, 281-285 (1960) wird die Polykondensation von Aminosäuremischungen, bestehend aus 2 Teilen Glutaminsäure, 2 Teilen Asparaginsäure und einem Teil einer Mischung aus anderen Aminosäuren in Gegenwart von Phosphorsäure bei Temperaturen über 100°C beschrieben. Es werden Proteinoide erhalten, die mit steigender Kondensationstemperatur steigende Ausbeuten und höheres Molgewicht besitzen. Die Proteinoide enthalten 10 bis 30 Mol-% Glutaminsäureeinheiten einkondensiert. Die Glutaminsäureeinheiten befinden sich hauptsächlich an den Kettenenden. Die erreichbaren Molmassen liegen bei 35000.

Durch rein thermische Behandlung von Glutaminsäure bildet sich gemäß Journal of the American Chemical Society, Band 80, Seite 2694 (1958) nahezu quantitativ Pyroglutaminsäure, die zur Polykondensation nicht fähig ist. Durch Copolykondensation von Glutaminsäure und anderen Aminosäuren sind jedoch Polykondensate herstellbar, die Glutaminsäureeinheiten einkondensiert enthalten.

In Nature, Band 190, Seite 531 (1961), und Polym. Bull., Band 1 (1978), 3, 177-180, wird die thermische Polykondensation von L-Asparagin und Isoasparagin in siedendem Wasser beschrieben. Es bilden sich Polyasparaginsäuren mit mittleren Molmassen bis zu 3000.

In J. Org. Chem., Band 26, 1084 (1961), wird die Polykondensation von N-Acetylasparaginsäure bei 145-200°C unter Abspaltung von Wasser und Essigsäure beschrieben. Es bildet sich ein glasiger Festkörper, der als Polyaspartimid identifiziert worden ist. In dieser Literaturstelle wird auch die Polykondensation des Hydrobromids des Asparaginsäureanhydrid in Pyridin beschrieben.

Eine Methode unter Verwendung von Phosphorsäure zur Polykondensation der DL-Asparaginsäure wird von Neri in J. Med. Chem., Vol. 16, 893-897 (1972), beschrieben. Bei einem Molverhältnis von Phosphorsäure/Asparaginsäure von 0,6 wird ein Polyaspartimid erhalten, das als Lösung in Dimethylformamid eine reduzierte Viskosität von 45 ml/g besitzt. Durch anschließende Umsetzung mit Ethanolamin wird eine modifizierte Polyasparaginsäure erhalten, die als Plasmaexpander geeignet ist. Die Umsetzung wird in Dimethylformamid als Lösemittel durchgeführt.

Aus der EP-B-0 256 366 ist ein Verfahren zur Herstellung von Polyasparaginamidsäure und ihren Salzen bekannt, bei dem man Maleinsäure und Ammoniak im Molverhältnis 1 : 1 bis 1,5 bei Temperaturen von 125 bis 140°C umsetzt und die Säuren ggf. in ihre Salze überführt. Bei der Umsetzung kann man auch Maleinsäureanhydrid einsetzten, aus dem durch Zugabe von Wasser zunächst Maleinsäure hergestellt wird. Aus der US-A-5 057 597 ist die Polykondensation von Asparaginsäurekristallen in einer gerührten Wirbelschicht bekannt.

Der vorliegenden Erfindung liegt die Aufgabe zugrunde, ein technisch leicht durchführbares Verfahren zur Herstellung von Polymerisaten der Asparaginsäure zur Verfügung zu stellen.

Die Aufgabe wird gelöst mit einem Verfahren zur Herstellung von Polymerisaten der Asparaginsäure durch thermische Kondensation von Halbamiden der Maleinsäure, Fumarsäure oder der Ammoniumsalze der Halbamide dieser Säuren, gegebenenfalls in Gegenwart von cokondensierbaren Verbindungen, wenn man

(a) Maleinsäureanhydrid und

(b) Ammoniak und/oder primäre oder sekundäre Amine

in Substanz im Molverhältnis (a) : (b) von 1 : 0,1 bis 1 : 3 zu Halbamiden von Maleinsäure, Fumarsäure oder deren Ammoniumsalzen bei Temperaturen bis zu 100°C umsetzt, die Umsetzungsprodukte anschließend, gegebenenfalls mit cokondensierbaren Verbindungen, bei Temperaturen oberhalb von 100°C thermisch kondensiert und die Kondensate gegebenenfalls hydrolysiert. Die Umsetzung von Maleinsäureanhydrid und Ammoniak und/oder primären oder sekundären Aminen wird vorzugsweise bei Temperaturen unterhalb des Schmelzpunktes des Maleinsäureanhydrids oder der Mischungen aus Maleinsäureanhydrid und den entstehenden Umsetzungsprodukten durchgeführt. Die Kondensation der pulverförmigen Umsetzungsprodukte aus (a) und (b) erfolgt vorzugsweise in Form eines Pulvers. Hierbei können andere, unter den Polymerisationsbedingungen inerte Pulver mitverwendet werden.

Als Komponente (a) setzt man Maleinsäureanhydrid ein, das beispielsweise in Form von Schuppen, Briketts, Pellets oder als Granulat vorliegen kann.

Als Komponente (b) setzt man Ammoniak und/oder primäre oder sekundäre Amine ein. Beispiele für Amine sind Mono- oder Dialkylamine mit 1 bis 30 C-Atomen. Einzelne Verbindungen dieser Art sind Methylamin, Ethylamin, n-Propylamin, Isopropylamin, n-Butylamin, Isobutylamin, Pentylamin, Hexylamin, Octylamin, Decylamin, Dodecylamin, Palmitylamin, Stearylamin, Dimethylamin, Diethylamin, Di-n-Propylamin, Diisopropylamin, Di-n-Butylamin, Dihexylamin und Dioctylamin. Außer Ammoniak und den Aminen kann man auch noch Hydroxylamin und Hydrazin einsetzen, sowie Ethanolamin, Propanolamin, Butanolamin, Diethanolamin sowie Dipropanolamin.

Die Umsetzung von (a) Maleinsäureanhydrid mit (b) Ammoniak und/ oder Aminen verläuft stark exotherm. Während diese Reaktion gemäß dem Stand der Technik in Verdünnungsmitteln vorgenommen wird, führt man dagegen bei dem erfindungsgemäßen Verfahren die Reaktion in Substanz durch, d.h. in Abwesenheit von Verdünnungsmitteln. Das Molverhältnis von (a) Maleinsäureanhydrid zu (b) Ammoniak und/oder primären oder sekundären Aminen beträgt 1 : 0,1 bis 1 : 3, vorzugsweise 1 : 0,5 bis 1 : 3.

Maleinsäureanhydrid ist ein starkes Acylierungsmittel, das schnell mit Aminen reagiert. Aus äquimolaren Mengen von Maleinsäureanhydrid und Ammoniak, primären oder sekundären Aminen entstehen Maleinsäuremonoamide oder Fumarsäuremonoamide. Mit überstöchiometrischen Mengen an Ammoniak oder Aminen entstehen die Ammoniumsalze der Halbamide von Maleinsäure oder Fumarsäure. Die Umsetzung der Komponenten (a) und (b) kann in Form mehrphasiger Reaktionsgemische durchgeführt werden. So können beispielsweise neben einer gasförmigen Phase mehrere feste Phasen vorliegen. Beispiele für feste Phasen sind festes Maleinsäureanhydrid, d.h. die bei der Reaktion eingesetzten Formkörper aus Maleinsäureanhydrid, wie beispielsweise Schuppen, Briketts, Stränge oder Granulate. Außerdem sind die in der ersten Stufe der Umsetzung entstehenden Halbamide der Maleinsäure oder Fumarsäure oder deren Ammoniumsalze unter den Reaktionsbedingungen Festprodukte. Mit fortschreitender Reaktion können sich die Mengenverhältnisse an festen Phasen aus Maleinsäureanhydrid und den Umsetzungsprodukten verändern. Da die Reaktion von Aminen mit Maleinsäureanhydrid schneller verläuft als die Salzbildung des Maleinsäureamids mit Aminen, können bei stöchiometrischen Verhältnissen ammoniumfreie Maleinsäureamide hergestellt werden. Die freie Carboxylgruppe der Maleinsäurehalbamide kann partiell oder vollständig mit Ammoniak oder Aminen neutralisiert werden. Da mehrere feste Reaktionsprodukte entstehen, ist die Reaktionsmischung üblicherweise mehrphasig.

Die Reaktion zwischen Maleinsäureanhydrid und Ammoniak oder den in Betracht kommenden Aminen läuft an der Oberfläche der Formkörper aus Maleinsäureanhydrid ab. Die Reaktionsprodukte können beispielsweise mechanisch von der Oberfläche der Maleinsäureanhydridformkörper entfernt werden. Dies geschieht am leichtesten dadurch, daß man das feste Reaktionsgemisch beispielsweise rührt, in einer Mühle mahlt oder auf einem Schüttelsieb abtrennt. Dadurch wird die Oberfläche der Formkörper aus Maleinsäureanhydrid von den Umsetzungsprodukten befreit, so daß wieder freies Maleinsäureanhydrid vorliegt, das mit Ammoniak oder Aminen weiterreagieren kann. Die erzeugte Reaktionswärme wird über die Reaktorwand oder mit Hilfe eines Inertgases abgeführt. Sie kann auch über Wärmeaustauscherflächen, die in die Reaktionszone eintauchen, abgeführt werden. Um ein Amin oder Ammoniak beispielsweise gezielt zu dosieren, kann man es mit einem Inertgas, wie Stickstoff, Luft oder Kohlendioxid, verdünnen und auf festes Maleinsäureanhydrid einwirken lassen. Dadurch können beispielsweise lokale Überhitzungen oder Überkonzentrationen an Amin oder Ammoniak vermieden werden.

Die Verdünnung der Amine bzw. von Ammoniak mit einem Inertgas führt zu einer Verminderung der Reaktionsgeschwindigkeit, so daß die entstehende Wärme besser abgeführt werden kann. Sofern die Reaktion nach Art einer Gas/Festphasenreaktion durchgeführt werden soll, so muß dabei die Temperatur in der Weise gesteuert werden, daß ein Aufschmelzen des Maleinsäureanhydrids vermieden wird. Die Reaktionstemperatur darf dabei die Schmelztemperatur des Maleinsäureanhydrids bzw. der Reaktionsmischung aus Maleinsäureanhydrid und den Umsetzungsprodukten nicht überschreiten. Mit fortschreitender Reaktion steigt die Schmelztemperatur der Reaktionsmischung an und kann am Ende der Umsetzung bis zu 100°C betragen. Sofern die Reaktion ohne die Ausbildung einer flüssigen Phase erfolgen soll, wird die Umsetzung der Komponenten (a) und (b) bei Temperaturen unterhalb des Schmelzpunkts des Maleinsäureanhydrids oder unterhalb des Schmelzpunkts der Mischungen aus Maleinsäureinhydrid und den entstehenden Umsetzungsprodukten durchgeführt.

Vorzugsweise wird die Reaktion bei Temperaturen von 0 bis 50°C durchgeführt.

Eine effektive Kontrolle der Reaktion kann auch durch Variation der zudosierten Ammoniak- oder Aminmenge erreicht werden.

Überraschenderweise ist auch der Eintrag an mechanischer Energie in die Reaktionszone eine wirksame Maßnahme, um die Reaktionsgeschwindigkeit zu beeinflussen, d.h. bei Bedarf zu verlangsamen oder zu beschleunigen. Durch den Eintrag an mechanischer Energie in das System wird die Oberfläche der Formkörper aus Maleinsäureanhydrid ständig erneuert, weil die an der Oberfläche anhaftenden Reaktionsprodukte aus Maleinsäureanhydrid und den Aminen oder Ammoniak entfernt werden und sich dadurch neue Maleinsäureanhydridoberflächen bilden. Die Geometrie der Maleinsäureanhydridformkörper und das Verhältnis von Oberfläche zu Volumen bestimmen die Reaktionsgeschwindigkeit. Man kann beliebige Formkörper aus Maleinsäureanhydrid bei der Reaktion einsetzen. Beispielsweise kann man Maleinsäureanhydridschuppen in einer Ammoniakatmosphäre lagern. Solange die Maleinsäureanhydridschuppen nicht bewegt werden, verläuft die Reaktion nur langsam. Die Reaktionsdauer beträgt mehrere Stunden bis

zu Tagen. Durch Diffusion des Ammoniaks in die Schuppen erfolgt die Reaktion jedoch nicht nur an der Oberfläche, sondern auch im Innern der Formkörper. Durch Rühren der Schuppen wird die Reaktion stark beschleunigt. Die Schuppen zerbröseln im Verlauf der Reaktion. Das Reaktionsprodukt fällt in jedem Fall als weißes rieselfähiges Pulver an. Der Teilchendurchmesser der einzelnen Partikel beträgt 5 bis 1000, vorzugsweise 10 bis 500 µm.

Die Umsetzung der Komponenten (a) und (b) kann auch in der Weise durchgeführt werden, daß neben einer flüssigen Phase eine oder mehrere feste Phasen existieren. Dies erfolgt beispielsweise durch Umsetzung von gasförmigen Aminen oder Ammoniak mit geschmolzenem Maleinsäureanhydrid. Die Temperaturen liegen bei dieser Reaktionsführung in dem Bereich von etwa 50 bis 100°C. Die Zugabe der Komponenten (b) erfolgt dabei mit einer solchen Geschwindigkeit, daß die Reaktionstemperatur nicht über 100°C ansteigt. Bei der Reaktion entstehen mehrere feste Reaktionsprodukte, wie Maleinsäureamid, Fumarsäureamid oder deren Ammoniumsalze. Nach Abschluß der Umsetzung liegen die Reaktionsprodukte als pulverförmige Feststoffe vor, eine flüssige Phase existiert dann nicht mehr.

Die Umsetzung der Komponenten (a) und (b) kann auch in der Gasphase durchgeführt werden, indem man den hohen Dampfdruck des Maleinsäureanhydrids ausnutzt und es z.B. mit Hilfe eines Inertgasstroms mit Aminen und/oder Ammoniak in der Gasphase zur Reaktion bringt. Dabei entstehen feinpulvrige Umsetzungsprodukte, die dann in der zweiten Stufe der Reaktion der Polykondensation unterworfen werden.

Die Umsetzungsprodukte aus den Komponenten (a) und (b) werden bei Temperaturen oberhalb von 100°C thermisch kondensiert. Hierbei handelt es sich im wesentlichen um eine Polyadditionsreaktion. In Abhängigkeit von der Kondensationstemperatur entstehen Kondensationsprodukte, die überwiegend Einheiten der Struktur I oder der ringförmigen Struktur II enthalten:

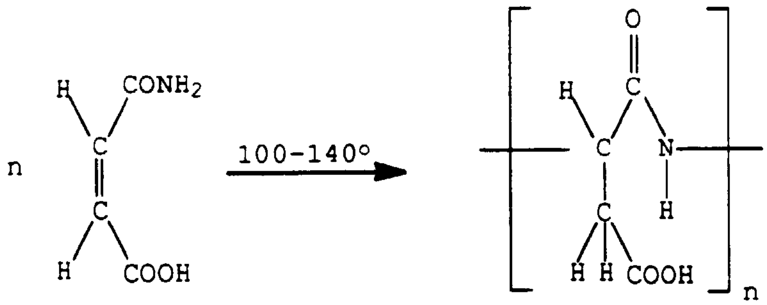


(I)

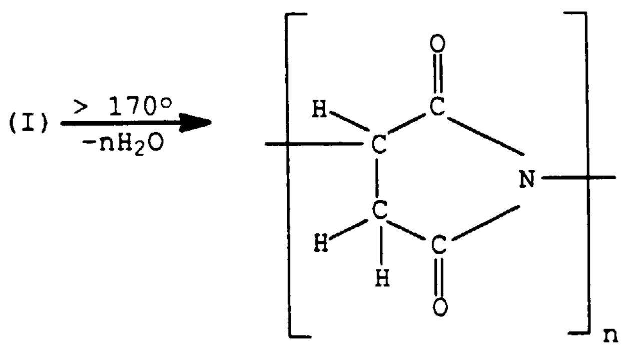


(II)

Unter gewissen Reaktionsbedingungen kann die Reaktion solche Zwischenstufen durchlaufen, wie sie aus der Polykondensation von Asparagin und Isoasparagin bekannt sind.

Bevorzugt geschieht dies, wenn die partiellen oder vollständigen Ammoniumsalze der Halbamide der Maleinsäure oder Fumarsäure eingesetzt werden:

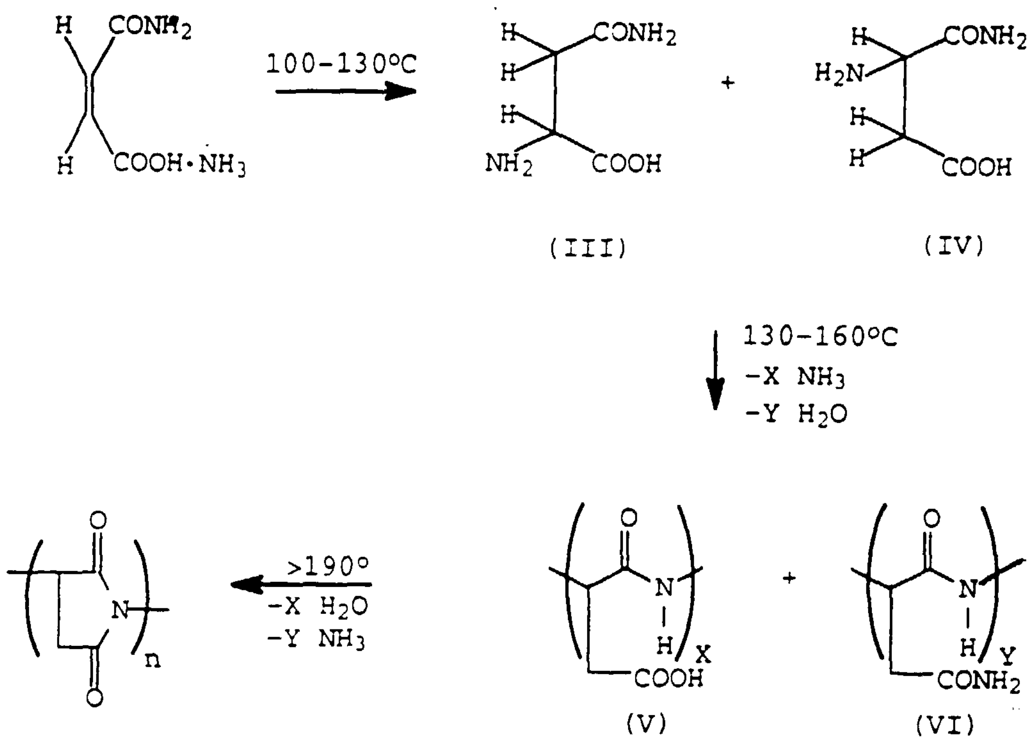


(III) (IV) (V) (VI)

n = 2 - 300

In den Formeln I und II bedeutet n = 2 bis 300. Bei Temperaturen oberhalb von 100 bis 140°C bilden sich wasserlösliche Kondensationsprodukte, die nahezu quantitativ aus der offenkettigen Form bestehen. In Abhängigkeit von der eingesetzten Ammoniakmenge liegt die in der Seitenkette der Struktur I befindliche Carbonsäuregruppe in Form der freien Carbonsäure, in Form eines Ammoniumsalzes oder auch als Carbonamidgruppe vor.

Molekulargewichte wurden mittels Gelpermeationschromatographie (GPC) mit Polyacrylsäure-Natrium-Salz als Eichsubstanzen bestimmt. Sie liegen zwischen 200 und 30 000, bevorzugt zwischen 400 und 20 000. Gewichtsmittelwerte liegen zwischen 500 und 10 000, bevorzugt zwischen 600 und 5000. Die K-Werte der Natriumsalze als 1 %ige Lösung in Wasser bei pH 7 betragen 7 bis 50, bevorzugt 8 bis 30.

Mit steigender Kondensationstemperatur entstehen Polykondensate, die zunehmende Anteile der wasserunlöslichen cyclischen Imidform mit der Struktur II enthalten. Bei 150°C bestehen die Kondensationsprodukte beispielsweise aus 80 bis 90 % der offenen Form der Struktur I und 10 bis 20 % aus der geschlossenen Form der Struktur II, während bei 170°C beide Formen in etwa gleichen Anteilen vorliegen. Bei 190°C enthalten die Kondensationsprodukte nur noch etwa 20 bis 30 % der offenen Form der Struktur I und 70 bis 80 % der geschlossenen Form der Struktur II, während bei Temperaturen oberhalb von 190 bis 240°C und darüber nur noch die Imidform der Struktur II erhalten wird. Sofern die Kondensation unter vermindertem Druck durchgeführt wird, wird die Bildung der Imidform der Struktur II der Polykondensate begünstigt. Beispielsweise bestehen Reaktionsprodukte, die bei 50 mbar hergestellt werden, bei Kondensationstemperaturen von 130 bis 150°C zu 2/3 aus der geschlossenen Form der Struktur II und nur noch zu 1/3 aus der offenen Form der Struktur I, während bei Kondensationstemperaturen von 170 bis 190°C und 50 mbar der Anteil der offenen Form der Struktur I unter 20 % liegt. Bei Kondensationstemperaturen oberhalb von 160°C und einem Druck von 50 mbar geht der Anteil an offenkettigen Reaktionsprodukten der Struktur I deutlich zurück. Bei 200°C und 50 mbar existieren praktisch nur noch cyclische Imidformen der Struktur II.

Die Kondensationsprodukte lassen sich mit Hilfe der H-NMR-Spektroskopie am besten charakterisieren. Mit Hilfe dieser Methode können die Doppelbindungen tragenden Monomeren von den entstehenden polymeren, gesättigten offenkettigen und den cyclischen polymere, Imidformen enthaltenen Polymeren unterschieden werden. Für die unten angegebenen Umsetzungsprodukte von Maleinsäureanhydrid mit Ammoniak sowie die polymere offene Form I und die polymere cyclische Form der Struktur II werden in 6-fach deuteriertem Dimethylsulfoxid folgende charakteristische H-NMR-Signale erhalten:

MSA : $NH_3$ : 1 : 2

5,8 (1 H, d, J = 13,2 Hz)
6,18 (1 H, d, J = 13,2 Hz)
7,8 (4 H, s br)
7,4 (1 H, s)
9,5 (1 H, s)

MSA : $NH_3$ : 1 : 1

6,3 (1 H; d, J = 13 Hz)
6,5 (1 H, d, J = 13 Hz)
8,15 (1 H, s)
8,55 (1 H, s)
14 (1 H, s)

polymere offene Form I

2,4 (2 H, $CH_2$, s br)
3,8 - 4,8 ( H, CH, m)

polymere cyclische Form II

2,3 - 2,85 (1 H, $CH_2$, m)
2,85 - 3,4 (1 H, $CH_2$, m)
4,8 - 5,4 (1 H, CH, m).

Das Verschwinden der scharfen Signale für die ungesättigten Monomeren läßt einen geringen Restgehalt an Ausgangsmonomeren erkennen. Der Übergang von der offenen polymeren Form in die cyclische polymere Form kann analytisch an der Wanderung der Signale für die CH-Gruppe von 3,8 bis 4,8 nach 4,8 bis 5,4 beobachtet werden. Aus dem Verhältnis dieser Signale kann der Gehalt an offenen und cyclischen Anteilen in Reaktionsmischungen ermittelt werden.

Durch die Wahl der Reaktionsbedingungen können Polykondensate erhalten werden, die neben Polyasparaginsäure- und Polyasparaginsäureimid-Einheiten auch Polyasparaginsäureamid-Einheiten enthalten, erkennbar an breiten Signalen im H-NMR im Bereich 6,5 bis 9. Die Asparaginsäuren können miteinander alpha- und betaartig verknüpft sein.

Für die Kondensation von Umsetzungsprodukten aus 1 mol Maleinsäureanhydrid und 2 mol Ammoniak oder Aminen beträgt die Kondensationstemperatur vorzugsweise mindestens 105°, während man bei Umsetzungsprodukten aus 1 mol Maleinsäureanhydrid und 1 mol Ammoniak und/oder Aminen für die Kondensation eine Mindesttemperatur von 120°C benötigt, um eine ausreichende Reaktionsgeschwindigkeit sicherzustellen. Sofern man lange Reaktionszeiten akzeptieren kann, ist es möglich, die Kondensationsreaktion auch in dem Bereich oberhalb von 100°C bis zu der oben angegebenen Mindesttemperatur vorzunehmen.

Die Kondensationsprodukte, die in der offenkettigen Form der Struktur I vorliegen, sind wasserlöslich. Die Wasserlöslichkeit kann verbessert werden, wenn man die Carboxylgruppen durch Zugabe von Basen, z.B. Alkalimetallbasen, Ammoniak, Aminen oder Erdalkalibasen neutralisiert. Die cyclische Imidform der Struktur II ist im allgemeinen nicht in Wasser löslich. Sie wird durch Zugabe von Basen durch Hydrolyse in die Salzform überführt, die dann gut wasserlöslich ist.

Die oben beschriebene Polykondensationsreaktion kann jedoch auch so verlaufen, daß zunächst unter Abspaltung von Wasser intermediär Maleinimid gebildet wird, aus dem dann durch Polyaddition Polyasparaginsäureimid entsteht.

Die Polymerisation der Umsetzungsprodukte an Maleinsäureanhydrid mit Ammoniak und/oder Aminen kann ohne Zwischenreinigung nach verschiedenen Verfahren durchgeführt werden. So ist es beispielsweise möglich, die Umsetzungsprodukte aus Ammoniak oder Aminen und flüssigem oder festem Maleinsäureanhydrid auf Temperaturen oberhalb von 100°C zu erwärmen, so daß die Umsetzungsprodukte zunächst eine dünnflüssige Schmelze bilden. Durch Tempern der Schmelze erfolgt innerhalb 5 bis 15 Minuten eine Viskositätszunahme unter Bildung polymerer Reaktionsprodukte. Innerhalb eines begrenzten Zeitraums ist das Reaktionsprodukt thermoplastisch verformbar, bildet sehr viskose, schlecht rührbare Polymerschmelzen, die bald zu einer zähen und danach zu einer spröden Reaktionsmasse weiter polymerisieren. Das Reaktionsgemisch durchläuft dabei die Phasenzustände fest/flüssig/fest.

Die Reaktion kann beispielsweise in einem Kneter oder auf einem beheizbaren Förderband durchgeführt werden.

Die Polymerisation kann auch nach Art einer Festphasenpolymerisation vorgenommen werden, ohne daß eine flüssige Phase durchlaufen wird. Diese Vorgehensweise besitzt Vorteile, weil dann keine hochviskose Masse durchmischt werden muß. Die Kondensation der pulverförmigen Umsetzungsprodukte aus (a) und (b) wird vorzugsweise in Gegenwart von anderen, unter den Polymerisationsbedingungen inerten Pulvern durchgeführt. Als inerte Pulver werden vorzugsweise Asparaginsäure-, Asparaginsäureamid- und/oder Asparaginsäureimideinheiten enthaltende Polymerisate oder monomere Asparaginsäure eingesetzt.

So stellt man beispielsweise aus den festen, bei der Polymerisation schmelzenden Monoamiden der Maleinsäure oder der Fumarsäure oder den partiell oder vollständig neutralisierten Ammoniumsalzen dieser Halbamide Mischungen mit anderen unter den Polymerisationsbedingungen inerten nichtschmelzenden Pulvern her. Der Anteil an zugesetzten

nichtschmelzenden Pulvern kann beispielsweise 50 bis 99, vorzugsweise 60 bis 90 Gew.-% betragen. Als nichtschmelzende inerte Pulver verwendet man vorzugsweise Asparaginsäureimideinheiten enthaltende Polymerisate. Bei einer kontinuierlich arbeitenden Polymerisation kann man zu diesem Zweck beispielsweise die entstehenden pulverförmigen Endprodukte als inerte unter den Reaktionsbedingungen nichtschmelzende Pulver teilweise zurückführen. Andere geeignete nichtschmelzende Pulver sind beispielsweise Sand, Glaspulver, Keramikpulver, Stahlkugeln, Asparaginsäure, Tonmineralien, Aminosäuren, Schichtsilikate, Zeolith, Aluminiumoxid, amorphe Silikate, Talkum, Siliciumdioxid, Kieselgur, Alumosilikate, Natriumsulfat, Titandioxid, Zement, Gips, Natriumcarbonat, Kaliumcarbonat, Ionenaustauscherharze, Natriumaluminiumsilikate, Natriumphosphate (Pentanatriumtriphosphat), Magnesiumsilikat, Kohlenstoff, Ruß, Aktivkohle, Molekularsieb, Stärke, Metalloxide, Bentonite, Silikate und Sulfide.

Die Kondensation der Umsetzungsprodukte aus den Komponenten (a) und (b) kann auch in Gegenwart von damit cokondensierbaren Verbindungen vorgenommen werden. Geeignete cokondensierbare Verbindungen sind beispielsweise Aminosäuren, Carbonsäuren, Anhydride mehrbasischer Carbonsäuren, Alkohole, Amine, alkoxylierte Alkohole, alkoxylierte Amine, Aminozucker, Kohlenhydrate, Zuckercarbonsäuren und/oder nichtproteinogene Aminosäuren. Bezogen auf ein Teil der Umsetzungsprodukte aus den Komponenten (a) und (b) verwendet man die cokondensierbaren Verbindungen in Mengen von 0 bis 30 %.

Die Polymerisation der Umsetzungsprodukte aus Maleinsäureanhydrid und Ammoniak kann auch dadurch erfolgen, daß die Reaktionsmischungen, bestehend aus Maleinsäuremonoamid, Fumarsäuremonoamid und/oder den partiellen oder vollständigen Ammoniumsalzen, vor der Polymerisation mit Basen neutralisiert werden. Geeignete Basen können anorganisch oder organischer Natur sein. Beispiele für anorganische Basen sind Erdalkali- und Alkalimetallhydroxide, -oxide-, carbonate und -hydrogencarbonate, beispielsweise Natriumhydroxid, Kaliumhydroxid, Natriumcarbonat, Kaliumcarbonat, Natriumhydrogencarbonat, Kaliumhydrogencarbonat und Natriumacetat. Beispiele für organische Basen sind primäre, sekundäre oder tert. Amine. Geeignete Basen sind u.a. Triethylamin, Ethanolamin, Diethanolamin, Pyridin, Methylamin oder Dimethylamin.

Diese Verfahrensvariante hat den Vorteil, daß nach erfolgter Polymerisation die Polymerisate direkt in wasserfreier neutralisierter Form anfallen. Beispielsweise entsteht Polyasparaginsäure-Natrium-Salz, Polyasparaginsäure-Kalium-Salz, Polyasparaginsäure-Triethanolammonium-Salz oder Polyasparaginsäure-Triethylammonium-Salz.

Polyasparaginsäure ist in neutralisierter Form im allgemeinen gut wasserlöslich und kann in vielen technischen Bereichen direkt eingesetzt werden.

Auch die Polymerisation der Alkali-, Erdalkali- oder Ammoniumsalze kann als Feststoffreaktion ausgeführt werden, indem inerte Pulver zugesetzt werden. Bevorzugt werden solche Pulver zugesetzt, die neutral oder alkalisch reagieren. Beispiele sind: Natriumsilikat, Natriumcarbonat, Kaliumcarbonat, Natriumphosphat, Zeolith A, Natriumhydroxid, Kaliumhydroxid, Natriumhydrogencarbonat, Kaliumhydrogencarbonat, Calciumoxid und/oder Calciumhydroxid.

Die Polykondensation der Umsetzungsprodukte aus den Komponenten (a) und (b) sowie gegebenenfalls der damit cokondensierbaren Verbindungen kann auch in Gegenwart von Säuren durchgeführt werden, beispielsweise Salzsäure, Phosphorsäure, Polyphosphorsäuren, phosphorige Säure, unterphosphorige Säure, Schwefelsäure, Dischwefelsäure, Schwefeltrioxid, Natrium- oder Kaliumhydrogensulfat, Mischungen der genannten Säuren, z.B. Mischungen aus Salzsäure und Phosphorsäure oder phosphoriger Säure. Pro mol der Umsetzungsprodukte aus den Komponenten (a) und (b) kann man beispielsweise 0,05 bis 2, vorzugsweise bis 1 mol einer anorgnischen Säure oder einer Mischung solcher Säuren einsetzen. Bei der Polymerisation erhält man Copolymerisate mit Molmassen bis zu 30 000. Die Molmassen der entstehenden Polykondensate betragen in der Regel 300 bis 2000, die mittlere Teilchengröße der Polykondensate beträgt 10 µm bis 500 µm.

Zur Umsetzung von festem Maleinsäureanhydrid mit gasförmigen Aminen sind alle Apparate geeignet, die für den Feststoffumgang geeignet sind. Diese Apparate sind auch für die anschließende Kondensation geeignet. Es können auch mehrere Apparate oder Kombinationen von Apparaten verwendet werden. Beispiele sind:

Drehrohre, Schaufeltrockner, Kneter, Taumelapparate, gerührtes Wirbelbett, ungerührtes Wirbelbett, Festbett, Fallturm, Silo, Konusmischer mit Schnecke, Zyklone, Sieb, Rüttelsieb und Förderbänder. Beispielsweise kann Maleinsäureanhydrid mit Ammoniak in einem Wirbelbett zur Reaktion gebracht werden. Durch Windsichter werden die feinteiligen Umsetzungsprodukte ausgetragen und können an Filtern oder Zyklonen abgeschieden werden.

Die Polymerisate werden üblicherweise in Form der wasserlöslichen Produkte eingesetzt. Sofern die Polymerisate aufgrund des Gehalts an cyclischen Einheiten mit der Struktur II in Wasser unlöslich sind, wird daraus durch Einwirkung von Basen, beispielsweise Natronlauge oder Ammoniak die Salzform der Kondensationsprodukte hergestellt. Die Salzform ist in Wasser löslich. Die Kondensationsprodukte werden in Form der Alkali- oder Ammoniumsalze beispielsweise als Waschmitteladditiv zu phosphatarmen (hierunter sollen Wasch- und Reinigungsmittelformulierungen mit einem Phosphatgehalt von höchstens 25 Gew.-% verstanden werden) und phosphatfreien, festen oder flüssigen Wasch- und Reinigungsmitteln in Mengen bis zu 20 Gew.-%, bezogen auf die Waschmittelformulierung, als Zusatz zu Geschirrspülmitteln oder auch als Scale-Inhibitor in Mengen von etwa 0,1 bis 1000 ppm, bezogen auf das zu behandelnde wäßrige Medium, verwendet. Die Kondensate können auch als Dispergiermittel für feste, anorganische oder organische Teilchen in Wasser verwendet werden. Dispersionsmittel werden in vielen chemisch-technischen Industriezweigen verwendet.

Wird beispielsweise als inerter Füllstoff für die Polykondensation Natriumsulfat, Natriumaluminiumsilikat oder Zeolith verwendet, so können die so hergestellten Pulver in Wasch- und Reinigungsmitteln eingesetzt werden.

Wird als inertes Pulver Ruß verwendet, so können die erhaltenen Polykondensatpulver für die Dispergierung von Kohle in Wasser verwendet werden (Kohleförderung).

Wird als inertes Pulver China Clay, Kreide oder Titandioxid verwendet, so können die erhaltenen Polykondensatpulver bei der Papierherstellung verwendet werden.

Werden als inerte Pulver Metalloxide, -sulfide, -silikate oder -carbonate verwendet, so können die erhaltenen Polykondensatpulver direkt in der Erzflotation und Erzverarbeitung als Dispergiermittel verwendet werden.

Werden als inerte Pulver Natrium- oder Natriumalumo-Silikate oder Zement verwendet, so können die Polykondensatpulver als Zementadditive verwendet werden. Die Dispergiermittel werden üblicherweise in Mengen von 0,05 bis 2, vorzugsweise 0,1 bis 1 Gew.-%, bezogen auf die zu dispergierenden Stoffe, eingesetzt.

Die auf diese Weise hergestellten Polymerisate können in allen Bereichen eingesetzt werden, in denen dispergierende, keimbildungs- und kristallwachstumsinhibierende Eigenschaften benötigt werden, z.B. bei der Scale-Inhibierung und dem Dispergieren von organischen oder anorganischen Pigmenten. Die hergestellten Kondensate sind biologisch abbaubar.

Die in den Beispielen angegebenen K-Werte wurden nach H. Fikentscher, Cellulose-Chemie, Band 13, 48-64 und 71-74 (1932) in 1 Gew.-% wäßriger Lösung bei 25°C und pH 7 am Natriumsalz der Polymerisate bestimmt.

Beispiel 1

In einem 1 l fassenden Rundkolben, der mit Rührer, Thermometer und einer Vorrichtung für das Arbeiten unter Stickstoff ausgestattet ist, werden 98 g Maleinsäureanhydrid in Form von Schuppen eingefüllt und auf eine Temperatur von 60° erhitzt, so daß eine Schmelze entsteht. Über die klare Schmelze wird dann ein schwacher Ammoniakstrom (20 Liter pro Stunde) geleitet, wobei die Temperatur der Reaktionsmischung auf 65°C ansteigt. Im Verlauf der Reaktion entstehen feste Reaktionsprodukte, die sich abscheiden. Ammoniak wird in einer solchen Menge in das Reaktionsgemisch eingeleitet, daß das Verhältnis von Maleinsäureanhydrid zu Ammoniak 1,2 bis 1,6 beträgt. Dafür benötigt man ca. 3 Stunden.

Beispiel 2

In einem 2 Liter Laborkneter werden 1000 g Maleinsäureanhydrid in Form von Schuppen eingefüllt und gerührt. Dann leitet man Ammoniakgas (20 l/h) in den Apparat und hält die Reaktionstemperatur bei 20 bis 40°C, in dem man den Apparat bei Bedarf durch einen Wärmeträgerkreislauf kühlt. Bei der Umsetzung wird darauf geachtet, daß die Temperatur unterhalb des Schmelzpunkts des Maleinsäureanhydrids bleibt. Man leitet 7 Stunden lang Ammoniak in den Kneter. Man erhält ein feines weißes Pulver mit einer in Tabelle 1 angegebenen Teilchengrößenverteilung. Die Reaktion wird solange fortgeführt, bis keine Schuppen mehr im Kolben sind und kein Ammoniak mehr aufgenommen wird. Zur Vervollständigung der Reaktion wird die Temperatur für 1 Stunde auf 50°C erhöht.

Tabelle 1:

| Teilchengrößenverteilung mittels Siebfraktionierung | |
|---|---|
| Maschenweite | Gewichtsanteil [%] |
| größer 500 µm | 0,5 |
| 100 - 500 µm | 26,5 |
| 60 - 100 µm | 14 |
| unter 60 µm | 59 |
| | Summe : 100 % |

H-NMR (400 MHz, $D_6$-DMSO): $\delta$ = 6,1 (1H, d, J = 13,2 Hz);
6,25 (1H, d, J = 13,2 Hz); 7,7 (2H, s, br);
9,3 (1H, s, br).

C-NMR (100 MHz, $D_6$-DMSO): $\delta$ = 129,3 (s, 1H); 135,3 (s, 1H); 167,7 (s, 1H); 167,9 (s, 1H).

Beispiel 3

a) Herstellung der Pulvermischung:

900 g Polyasparaginsäureimid werden mit 100 g des aus Beispiel 2 erhaltenen Pulvers trocken bei 20°C gemischt.

b) Polymerisation:

In einem 2-Liter-Laborkneter werden 200 g der Pulvermischung aus a) eingefüllt und auf 150°C erhitzt. Dann werden in 30 minütigen Abständen je 50 g-Portionen der Pulvermischung aus a) zum Kneterinhalt zugegeben. Die gesamte Füllmenge beträgt bei Versuchsende 750 g Pulvermischung.

Nach Polymerisationsende wird das Polymerisat vom eingesetzten Polyasparaginsäureimid durch Auflösen in Wasser abgetrennt. Das Polyimid verbleibt als wasserunlösliches Pulver. Das durch Polymerisieren der Umsetzungsprodukte aus Maleinsäureanhydrid und Ammoniak erhaltene Polymer hat in der Natriumform als 1 %ige Lösung in Wasser bei pH 7 einen K-Wert von 12. Das Molekulargewicht des Polymeren (Gewichtsmittel) wurde durch GPC gegen Poly-Natriumacrylat-Standards bestimmt und liegt bei 1600.

Beispiel 4

a) Herstellung der Pulvermischung:

700 g Polyasparaginsäureimid werden mit 300 g des aus Beispiel 2 erhaltenen Pulvers trocken gemischt.

b) Polymerisation

In dem auf 135°C vorgeheizten 2-Liter-Laborkneter werden 200 g der Pulvermischung a) eingefüllt. Dann werden alle 30 Minuten 50 g-Portionen Pulvermischung a) zugegeben. Die Gesamtmenge beträgt 700 g. Der Kneterinhalt bleibt über die ganze Polymerisationsphase durchgehend pulvrig. Durch Einleiten von Stickstoff während der Polymerisation werden Wasser und andere flüchtige Bestandteile aus der Reaktionsmischung entfernt.

Das durch Polymerisieren der Umsetzungsprodukte aus Beispiel 2 erhaltene Polymere hat in der Natriumform bei pH 7 einen K-Wert von 13, was einem Molekulargewicht (Gewichtsmittel) von 1700 entspricht.

Beispiele 5 bis 9

Jeweils 100 g des gemäß Beispiel 2 hergestellten Umsetzungsproduktes aus festem Maleinsäureanhydrid und 0,9 bis 1,2 mol Ammoniak werden in einen 500 ml fassenden Rundkolben gefüllt und der Kolben mittels Wasserstrahlpumpe evakuiert. Man taucht den evakuierten Kolben mit der Eduktmischung in ein auf die in Tabelle 2 angegebene Temperatur vorgeheiztes Ölbad ein und beläßt das Reaktionsgefäß für 5 Stunden unter Vakuum bei dieser Temperatur. Der Kolbeninhalt bläht sich dabei unter Schaumbildung auf.

Nach dem Belüften und Erkalten läßt sich der Schaum leicht zu einem feinen Pulver zerstoßen. Das Gewicht des erhaltenen Pulvers ist in Tabelle 2 angegeben.

Ein Teil der Reaktionsmischung wird in Wasser (je nach Herstellungstemperatur) aufgelöst oder aufgeschlämmt und mittels Natronlauge auf pH 7 neutralisiert und der K-Wert in 1 %iger Lösung bestimmt.

Tabelle 2

| Bei-spiel | Reaktions-temp. [°C] | Gewicht [g] | mittels H-NMR bestimmte Anteile an offener Form I | mittels H-NMR bestimmte Anteile an cycl. Form II | K-Wert | mittel GPC ermitteltes Molekulargewicht (Gewichtsmittel) |
|---|---|---|---|---|---|---|
| 5 | 130 | 86,1 | 2/3 | 1/3 | 10,1 | 1660 |
| 6 | 150 | 85 | 1/5 | 4/5 | 10,5 | 1950 |
| 7 | 170 | 80,6 | 1/10 | 9/10 | 10,2 | 2080 |
| 8 | 190 | 77,9 | - | 1 | 12,6 | 2310 |
| 9 | 240 | 71,9 | - | 1 | 12,9 | 2510 |

Beispiel 10 (Polymerisation des Natriumsalzes)

a) Natriumsalz von Maleinsäuremonoamid:

100 g des im Beispiel 2 hergestellten Umsetzungsproduktes werden in 250 g Wasser aufgelöst und mit 172 g 10 %iger Natronlauge vollständig neutralisiert. Die resultierende Lösung besitzt einen pH-Wert von 7,5. Die klare Lösung wird am Rotationsverdampfer bei 50 mbar und 60°C zur Trockene eingedämpft. Man erhält einen weißen, zähen Feststoff, der durch H-NMR-Spektroskopie charakterisiert wird.

H-NMR (270 MHz, $D_2O$: $\delta$ = 5,93 (1H, d, J = 13,35 Hz); 6,4 (1H, d, J = 13,35 Hz)

b) Das in a) hergestellte Salz wird in einem 1 Liter fassenden Rundkolben am Rotationsverdampfer unter Durchleiten von Stickstoff zuerst 2 Stunden bei 130°C und anschließend für 2 Stunden auf 200°C erhitzt.

Dabei bildet sich eine aufgeschäumte Masse.

Der Kolbeninhalt wird für 2 Stunden bei 200°C gehalten und anschließend abgekühlt. Die bei 130°C und 200°C hergestellten Polymere werden mittels H-NMR spektroskopisch untersucht. Man erkennt bereits bei 130°C die Bildung von Polymerisaten. Bei 130°C verbleiben jedoch noch ca. 10 % restliche Monomeranteile. Das bei 200°C hergestellte Polymer ist vollständig frei von Monomeranteilen und zeigt im H-NMR (200 MHz, $D_2O$) bei $\delta$ = 2,2 bis 3,1 (2H) und $\delta$ = 4,2 bis 5,1 (1H) typische Signale für Poly-Natriumaspartat.

Das so hergestellte Poly-Natriumaspartat fällt bei dieser Herstellmethode als wasserfreie, gut pulverisierbare Masse an, die sich schnell in Wasser löst.

Vergleichsbeispiel 1

Gemäß der Lehre der EP-B-0 256 366 wurde nach Beispiel 1 ein Polymerisat hergestellt, indem man Maleinsäureanhydrid durch Erhitzen in Wasser unter Bildung von Maleinsäure löste, mit Ammoniak neutralisierte und anschließend kondensierte. Das Verhältnis von Maleinsäure zu Ammoniak betrug 1 : 1.

Man erhielt ein Reaktionsprodukt, das gemäß spektroskopischer Untersuchung 14 mol-% nichtkondensierte Fumarsäure enthielt. Durch Lösen in Wasser und Neutralisieren mittels 10 %iger Natronlauge wurde eine wäßrige Natriumsalzlösung des Polymers hergestellt. Der K-Wert betrug in 1 %iger Lösung in Wasser 11,5.

Anwendungstechnische Prüfungen der polymeren Umsetzungsprodukte

CD-Test (Clay-Dispergierung)

Als Modell für partikuären Schmutz wird feingemahlener China-Clay SPS 151 benutzt. 1 g Clay wird unter Zusatz von 1 ml einer 0,1 %igen Natriumsalzlösung des Polyelektrolyten in 98 ml Wasser 10 Minuten in einem Standzylinder (100 ml) intensiv dispergiert. Sofort nach dem Rühren nimmt man aus der Mitte des Standzylinders eine Probe von 2,5 ml und bestimmt nach dem Verdünnen auf 25 ml die Trübung der Dispersion mit einem Turbidimeter. Nach 30- bzw. 60minütiger Standzeit der Dispersion werden erneut Proben genommen und wie oben die Trübung bestimmt. Die Trübung der Dispersion wird in NTU (nephelometric turbidity units) angegeben. Je weniger sich die Dispersion während der Lagerung absetzt, desto höher sind die gemessenen Trübungswerte und um so stabiler ist die Dispersion. Als zweite physikalische Meßgröße wird die Dispersionskonstante bestimmt, die das zeitliche Verhalten des Sedimetationsprozesses beschreibt. Da der Sedimentationsprozeßt annähernd durch ein monoexponentielles Zeitgesetz beschrieben werden kann, gibt $\tau$ die Zeit an, in der die Trübung auf 1/e-tel des Ausgangszustandes zum Zeitpunkt t = 0 abfällt.

Je höher ein Wert für $\tau$ ist, um so langsamer setzt sich die Dispersion ab.

Tabelle 3

| Beispiel | Polymer nach Beispiel | Trübung in NTU bei | | | $\tau$ (min] |
|---|---|---|---|---|---|
| | | t = 0 | t = 30 Minuten | t = 60 | |
| 11 | 5 | 740 | 580 | 500 | 159 |
| 12 | 6 | 750 | 600 | 530 | 184 |
| 13 | 7 | 750 | 610 | 530 | 177 |
| 14 | 8 | 750 | 600 | 550 | 230 |

Tabelle 3 (fortgesetzt)

| Beispiel | Polymer nach Beispiel | Trübung in NTU bei | | | τ (min] |
|---|---|---|---|---|---|
| | | t = 0 | t = 30 Minuten | t = 60 | |
| 15 | 9 | 750 | 600 | 550 | 230 |
| Vergl. Bsp. 2 | ohne Polymer | 600 | 37 | 33 | 41,4 |
| 3 | Vergl. Bsp. 1 | 730 | 580 | 450 | 125 |

Wie man der Tabelle 3 entnehmen kann, haben die nach dem erfindungsgemäßen Verfahren hergestellten Polykondensate bessere dispergierende Eigenschaften als nach dem Stand der Technik herstellbare Polykondensate (Vergl. Bsp. 1).

Belagsverhinderung bei der Meerwasserentsalzung

In dem Test werden die Polymere als Inhibitor bei der Bildung von Calcium- und Magnesiumhydroxiden und -carbonaten aus synthetischer Meerwasserlösung untersucht. Bei der Meerwasserentsalzung bilden besonders Calciumcarbonat und Magnesiumhydroxid auf den Wärmetauscheroberflächen festhaftende und störende Beläge. Auch die Bildung von Bariumsulfat ist ein ernstzunehmendes Problem.

Die Testlösung besteht aus einer wäßrigen Salzlösung und enthält:
70 °d $Mg^{2+}$
14 °d $Ca^{2+}$
70 °d $CO_3^{2-}$.

Diese synthetische Meerwasserlösung wird mit 25 ppm des in Tabelle 4 angegebenen Polymers versetzt und für 3 Stunden in einer dynamischen Umlaufapparatur im Kreis gepumpt. Nach 3 Stunden Testdauer werden Proben entnommen, die titrimetrisch auf den Gehalt an Wasserhärte analysiert werden. Durch die Abnahme an Wasserhärte im Verlauf des Versuches kann man auf sich bildende Beläge im Wärmeaustauscher zurückrechnen. Je geringer der Härtegrad in der entnommenen Wasserprobe, um so mehr Belag hat sich auf den Wärmetauscherrohren abgesetzt. Die ermittelten Wasserhärten sind in Tabelle 4 aufgelistet. Ein hoher Härtegrad nach 3 Stunden Testzeit läßt auf gute Belagsinhibition schließen.

Tabelle 4

| Belagsverhinderung bei der Meerwasserentsalzung | | | |
|---|---|---|---|
| Beispiel | Polymer nach Beispiel | Härtegrad zu Beginn [°d] | Härtegrad nach 3 Stunden [°d] |
| 16 | 8 | 84 | 60 |
| Vergl. Bsp. 4 | ohne Polymer | 84 | 42 |
| 5 | Oligomaleinsäure ($M_w$ = 4000) | 84 | 50 |

Aus Tabelle 4 erkennt man, daß durch erfindungsgemäß hergestellte Polyaspartate Beläge verhindert werden, die durch Bildung von schwerlöslichen Salzen von Calcium und Magnesium als Hydroxide oder Carbonate entstehen.

**Patentansprüche**

1. Verfahren zur Herstellung von Polymerisaten der Asparaginsäure durch thermische Kondensation von Halbamiden der Maleinsäure, Fumarsäure oder der Ammoniumsalze der Halbamide dieser Säuren, gegebenenfalls in Gegenwart von cokondensierbaren Verbindungen, dadurch gekennzeichnet, daß man

   (a) Maleinsäureanhydrid und

   (b) Ammoniak und/oder primäre oder sekundäre Amine

in Substanz im Molverhältnis (a) : (b) von 1 : 0,1 bis 1 : 3 zu Halbamiden von Maleinsäure, Fumarsäure oder deren Ammoniumsalzen bei Temperaturen bis zu 100°C umsetzt, die Umsetzungsprodukte anschließend, gegebenenfalls mit cokondensierbaren Verbindungen, bei Temperaturen oberhalb von 100°C thermisch kondensiert und die Kondensate gegebenenfalls hydrolysiert.

**2.** Verfahren nach Anspruch 1, dadurch gekennzeichnet, daß man die Umsetzung von

(a) Maleinsäureanhydrid und

(b) Ammoniak und/oder primären oder sekundären Aminen

bei Temperaturen unterhalb des Schmelzpunkts des Maleinsäureanhydrids oder der Mischungen aus Maleinsäureanhydrid und den entstehenden Umsetzungsprodukten durchführt.

**3.** Verfahren nach Anspruch 1 oder 2, dadurch gekennzeichnet, daß man als cokondensierbare Verbindungen Aminosäuren, Carbonsäuren, Anhydride mehrbasischer Carbonsäuren, Alkohole, Amine, alkoxylierte Alkohole, alkoxylierte Amine, Aminozucker, Kohlenhydrate, Zuckercarbonsäuren und/oder nichtproteinogene Aminocarbonsäuren einsetzt.

**4.** Verfahren nach Anspruch 1 oder 2, dadurch gekennzeichnet, daß man die Kondensation der pulverförmigen Umsetzungsprodukte aus (a) und (b) in Gegenwart von Kondensationsprodukten der Umsetzungsprodukte aus (a) und (b) durchführt.

**5.** Verfahren nach Anspruch 3, dadurch gekennzeichnet, daß man die Kondensation der pulverförmigen Umsetzungsprodukte aus (a) und (b) in Gegenwart von anderen, unter den Polymerisationsbedingungen inerten Pulvern durchführt.

**6.** Verfahren nach Anspruch 4, dadurch gekennzeichnet, daß man als inerte Pulver Asparaginsäureimideinheiten enthaltende Polymerisate einsetzt.

**Claims**

**1.** A process for preparing polymers of aspartic acid by thermal condensation of monoamides of maleic acid, fumaric acid or the ammonium salts of the monoamides of these acids, in the presence or absence of compounds capable of cocondensation, wherein

(a) maleic anhydride and

(b) ammonia and/or primary or secondary amines

are reacted without diluent in the (a) : (b) molar ratio of 1 : 0.1 to 1 : 3 to give monoamides of maleic acid, fumaric acid or their ammonium salts at up to 100°C, the reaction products are subsequently thermally condensed, with or without compounds capable of cocondensation, at above 100°C, and the condensates are hydrolyzed where appropriate.

**2.** A process as claimed in claim 1, wherein the reaction of

(a) maleic anhydride and

(b) ammonia and/or primary or secondary amines

is carried out at below the melting point of the maleic anhydride or of the mixtures of maleic anhydride and the reaction products.

**3.** A process as claimed in claim 1 or 2, wherein the compounds capable of cocondensation which are used are amino acids, carboxylic acids, anhydrides of polybasic carboxylic acids, alcohols, amines, alkoxylated alcohols, alkoxylated amines, aminosaccharides, carbohydrates, saccharidecarboxylic acids and/or non-proteinogeous amino carboxylic acids.

4. A process as claimed in claim 1 or 2, wherein the condensation of the powdered products of the reaction of (a) and (b) is carried out in the presence of products of the condensation of the products of the reaction of (a) and (b).

5. A process as claimed in claim 3, wherein the condensation of the powdered products of the reaction of (a) and (b) is carried out in the presence of other powders which are inert under the polymerization conditions.

6. A process as claimed in claim 4, wherein polymers containing aspartimide units are used as inert powders.

**Revendications**

1. Procédé de préparation de polymères de l'acide aspartique par condensation thermique de semi-amides de l'acide maléique, de l'acide fumarique ou des sels d'ammonium des semi-amides de ces acides, éventuellement en présence de composés co-condensables, caractérisé en ce que l'on fait réagir à des températures allant jusqu'à 100°C

   (a) de l'anhydride maléique et
   (b) de l'ammoniac et/ou des amines primaires ou secondaires

   en substance dans un rapport molaire de (a) à (b) de 1:0,1 à 1:3, pour obtenir des semi-amides d'acide maléique, d'acide fumarique ou de leurs sels d'ammonium, puis on condense thermiquement les produits de réaction, éventuellement avec des composés co-condensables, à des températures supérieures à 100°C et on hydrolyse éventuellement les produits de condensation.

2. Procédé selon la revendication 1, caractérisé en ce que l'on conduit la réaction

   (a) d'anhydride maléique et
   (b) d'ammoniac et/ou d'amines primaires ou secondaires

   à des températures inférieures au point de fusion de l'anhydride maléique ou des mélanges d'anhydride maléique et des produits de réaction qui se forment.

3. Procédé selon la revendication 1 ou 2, caractérisé en ce que l'on utilise, comme composés co-condensables, les amino-acides, les acides carboxyliques, les anhydrides de polyacides carboxyliques, les alcools, les amines, les alcools alcoxylés, les amines alcoxylées, les aminosucres, les hydrates de carbone, les acides carboxyliques de sucre et/ou les acides aminocarboxyliques non protéinogènes.

4. Procédé selon la revendication 1 ou 2, caractérisé en ce que l'on conduit la condensation des produits de réaction de (a) et (b) en poudre en présence de produits de condensation des produits de réaction de (a) et (b).

5. Procédé selon la revendication 3, caractérisé en ce que l'on conduit la condensation des produits de réaction de (a) et (b) en poudre en présence d'autres poudres inertes dans les conditions de polymérisation.

6. Procédé selon la revendication 4, caractérisé en ce que l'on utilise, comme poudre inerte, des polymères contenant des motifs aspartimide.